# EUROPEAN PATENT SPECIFICATION

(11) **EP 2 615 665 B1**
(45) Date of publication and mention of the grant of the patent: **31.10.2018**
(21) Application number: 11823754.4
(22) Date of filing: 06.09.2011
(51) Int. Cl.: H01M 2/16, H01M 2/14

(54) **SEPARATOR, MANUFACTURING METHOD THEREOF, AND ELECTROCHEMICAL DEVICE COMPRISING THE SAME**
SEPARATOR, HERSTELLUNGSVERFAHREN DAFÜR UND DIESEN ENTHALTENDE ELEKTROCHEMISCHE VORRICHTUNG
SÉPARATEUR, SON PROCÉDÉ DE PRODUCTION ET ÉLÉMENT ÉLECTROCHIMIQUE LE COMPORTANT

(30) Priority: 06.09.2011 KR 20110090097; 06.09.2010 KR 20100087091
(43) Date of publication of application: 17.07.2013
(73) Proprietor: LG Chem, Ltd., Seoul 07336 (KR)
(72) Inventor: SON, Jeong-Man, Gyeongju-si Gyeongbuk 780-956 (KR); BAE, Yoon-Jung, Daejeon 302-740 (KR)
(74) Representative: Cabinet Plasseraud
(86) International application number: PCT/KR2011/006576
(87) International publication number: WO 2012/033321

(56) References cited:
- EP-A1- 2 169 743
- EP-A2- 2 551 937
- KR-A- 19980 068 279
- KR-A- 20060 065 810
- KR-A- 20090 083 854
- KR-B1- 100 781 625
- US-A- 5 368 889

## Description

### BACKGROUND

### Field

The present invention relates to a separator for an electrochemical device, a manufacturing method thereof, and an electrochemical device comprising the same.

### Description of Related Art

Recently, there is an increasing interest in energy storage technologies. As the application fields of energy storage technologies have been extended to mobile phones, camcorders, notebook computers, and even electric cars, efforts towards the research and development on electrochemical devices have been increasing. In aspect of the above situation, rechargeable secondary batteries are at the center of attention as the most favorable electrochemical device. Lately, many studies have been done to design new electrodes and batteries to improve the capacity density and specific energy of the batteries.

Among currently available secondary batteries, lithium secondary batteries developed in the early 1990's have drawn attention for their higher operating voltage and much higher energy density than those of conventional batteries using an aqueous electrolyte such as Ni-MH batteries, Ni-Cd batteries, and H₂SO₄-Pb batteries. However, lithium secondary batteries have shortcomings such as a complicate manufacturing process and safety-related problems caused by the use of an organic electrolyte, for example, firing, explosion, and the like. Lithium-ion polymer batteries that have settled the drawbacks of lithium ion batteries are considered as one of the next-generation batteries. However, lithium-ion polymer batteries have a relatively lower battery capacity than lithium ion batteries, and in particular, have an insufficient discharging capacity at low temperature. Accordingly, there is an urgent need to solve these disadvantages of lithium-ion polymer batteries.

A variety of electrochemical devices are being produced from many different companies, and they all exhibit different safety characteristics. Thus, it is important to evaluate and ensure the safety of electrochemical devices. The most important factor to consider is that electrochemical devices should not cause any damage to users due to malfunction. Taking this into account, Safety Regulations strictly prohibit safety-related accidents of electrochemical devices such as firing or smoke emission. According to the safety characteristics of electrochemical devices, thermal runaway caused by overheating of an electrochemical device or puncture of a separator may increase the risk of explosion.

In particular, a polyolefin-based porous membrane conventionally used as a separator for an electrochemical device may show severe thermal shrinkage behaviors when the electrochemical device is subject to thermal runaway, thereby resulting in a short circuit between a cathode and an anode. Meanwhile, a conventional separator such as a polyolefin-based porous membrane has poor wettability to an electrolyte, which may have a negative influence on improving the performance of an electrochemical device.

Accordingly, there is a need for a separator with excellent heat resistance and wettability to an electrolyte.

### DISCLOSURE

### Technical Problem

Therefore, it is an object of the invention to provide a separator having improved heat resistance and wettability to an electrolyte that can replace a conventional separator, a manufacturing method thereof, and an electrochemical device comprising the same.

### Technical Solution

In an aspect of the present invention, there is provided a separator including a plate-like porous substrate, and a porous thin-film coating layer formed on at least one surface of the plate-like porous substrate and containing crosslinked polyamide prepared by polymerizing a multifunctional amine compound having at least two amine groups with a multifunctional acyl halide compound of an aromatic compound having at least two acyl halide groups.

In another aspect of the present invention, there is provided a method for manufacturing the above-mentioned separator, including preparing a first solution by dissolving a multifunctional amine compound having at least two amine groups in water and a second solution by dissolving a multifunctional acyl halide compound of an aromatic compound having at least two acyl halide groups in an organic solvent, and applying the first solution and the second solution on at least one surface of a plate-like porous substrate in a sequential manner, followed by interfacial polymerization.

### Advantageous Effects

The crosslinked polyamide thin-film coating layer formed on the porous substrate has a very small thickness and a high porosity, and thus hardly affects the air permeability of the separator. Also, the crosslinked polyamide thin-film coating layer has good hydrophilicity and wettability to an electrolyte as intrinsic characteristics of amide, and thus may improve the performance of the electrochemical device. Also, the crosslinked polyamide thin-film coating layer has excellent resistance to heat and deformation, and thus may prevent the thermal shrinkage of the separator.

### DESCRIPTION OF DRAWINGS

The accompanying drawings illustrate preferred embodiments of the present disclosure and, together with the foregoing disclosure, serve to provide further understanding of the present disclosure. However, the present disclosure is not to be construed as being limited to the drawings.
FIG. 1 is a cross-sectional view illustrating a jelly roll-type electrode assembly according to a preferred embodiment of the present invention.
FIG. 2 is a cross-sectional view illustrating an electrode assembly with a zigzag-bent separator according to a preferred embodiment of the present invention.
FIG. 3 is a cross-sectional view illustrating a stack-type electrode assembly according to a preferred embodiment of the present invention.
FIG. 4 is a cross-sectional view illustrating a full cell according to a preferred embodiment of the present invention.
FIG. 5 is a cross-sectional view illustrating a full cell according to another preferred embodiment of the present invention.
FIG. 6 is a cross-sectional view illustrating a bi-cell according to a preferred embodiment of the present invention.
FIG. 7 is a cross-sectional view illustrating a bi-cell according to another preferred embodiment of the present invention.
FIG. 8 is a cross-sectional view illustrating the winding of a stack/folding-type electrode assembly according to a preferred embodiment of the present invention.
FIG. 9 is a cross-sectional view illustrating a stack/folding-type electrode assembly according to a preferred embodiment of the present invention.
FIG. 10 is a cross-sectional view illustrating the winding of a double-sided stack/folding-type electrode assembly according to a preferred embodiment of the present invention.
FIG. 11 is a cross-sectional view illustrating an electrode assembly with a bent folding film according to a preferred embodiment of the present invention.
FIG. 12 is a cross-sectional view illustrating a double-sided electrode assembly with a bent folding film according to a preferred embodiment of the present invention.
FIG. 13 is a cross-sectional view illustrating the winding of an electrode assembly with a folding film according to a preferred embodiment of the present invention.
FIG. 14 is a cross-sectional view illustrating the winding of a double-sided electrode assembly with a folding film according to a preferred embodiment of the present invention.
FIG. 15 is a graph illustrating the charging performance of lithium secondary batteries with separators according to Comparative example 1 and Example 1.

### Reference Symbols

| | |
|---|---|
| 10: cathode | 20: anode |
| 70: separator | 80: folding film |

### DETAILED DESCRIPTION

Hereinafter, the present invention will be described in detail. Prior to the description, it should be understood that the terms used in the specification and appended claims should not be construed as limited to general and dictionary meanings, but interpreted based on the meanings and concepts corresponding to technical aspects of the present invention on the basis of the principle that the inventor is allowed to define terms appropriately for the best explanation.

A separator of the present invention may have a plate-like porous substrate. The plate-like porous substrate is not particularly limited if it is a conventional one used in an electrochemical device, and may be, for example, a porous membrane or non-woven fabric made from various polymers. Specially, a polyolefin-based porous membrane or a non-woven fabric made from polyethylene teraphthalate fibers that is used in an electrochemical device, particularly as a separator for an electrochemical device may be used. In this instance, its material or shape may be variously selected depending on the purpose. For example, the polyolefin-based porous membrane may be formed from polyolefin including polyethylene such as high-density polyethylene, linear low-density polyethylene, low-density polyethylene, or ultra-high-molecular-weight polyethylene, polypropylene, polybutylene, and polypentene, singularly or in combination. Also, the non-woven fabric may be made from fibers using polyolefin-based polymers or polymers having higher heat resistance than those of polyolefin-based polymers. The plate-like porous substrate may be monolayered, or if necessary, multilayered, for example, in the structure of polypropylene/polyethylene or polypropylene/polyethy lene/polypropylene.

The thickness of the plate-like porous substrate is not particularly limited, however is preferably 1 to 100 µm, more preferably 5 to 50 µm. Also, the pore size and the porosity of the porous substrate are not particularly limited, however are preferably 0.01 to 50 µm and 10 to 95 %, respectively.

The separator of the present invention has a porous thin-film coating layer containing crosslinked polyamide formed on the plate-like porous substrate, the crosslinked polyamide prepared by polymerizing a multifunctional amine compound having at least two amine groups with a multifunctional acyl halide compound of an aromatic compound having at least two acyl halide groups. The porous thin-film coating layer containing the crosslinked polyamide may be formed on one surface or both surfaces of the plate-like porous substrate.

The crosslinked polyamide constituting the porous thin-film coating layer according to the present invention is prepared by an amide bond formed by polymerization of a multifunctional amine compound having at least two amine groups and a multifunctional acyl halide compound of an aromatic compound having at least two acyl halide groups. The amide bond has excellent stability and affinity for an electrolyte. The crosslinked polyamide is particularly excellent in the resistance to heat and deformation. Accordingly, the separator having the porous thin-film coating layer containing the crosslinked polyamide may have excellent affinity for an electrolyte and wettability to an electrolyte, and thus, may contribute to improving the performance of a battery. As mentioned above, the porous thin-film coating layer containing the crosslinked polymide also has excellent resistance to heat and deformation, and thus, may prevent the thermal shrinkage of a separator.

The porous thin-film coating layer containing the crosslinked polyamide has a very small thickness and a high porosity so as not to influence the air permeability of the plate-like porous substrate, and so the entire separator has excellent air permeability. In this instance, for excellent air permeability, the porous thin-film coating layer containing the crosslinked polyamide may preferably have a thickness of 0.1 to 1 µm.

Preferably, the multifunctional amine compound of the present invention may include metaphenylenediamine, paraphenylenediamine, piperazine, cycloaliphatic secondary diamine, N,N'-dimethyl-1,3-phenylenediamine, N,N'-diphenylethylene diamine, benzathine, and xylene diamine.

The multifunctional acyl halide compound may include trimezoyl chloride, isophthaloyl chloride, and terephthaloyl chloride.

The separator of the present invention may be, for example, manufactured by forming a porous thin-film coating layer containing crosslinked polyimide prepared using an interfacial polymerization of a multifunctional amine compound with a multifunctional acyl halide compound, and its specific method is as follows.

First, a multifunctional amine compound having at least two amine groups may be dissolved in water to prepare a first solution, and a multifunctional acyl halide compound of an aromatic compound having at least two acyl halide groups may be dissolved in an organic solvent to prepare a second solution.

The interfacial polymerization is a type of polymerization in which reagents are dissolved separately in two immiscible liquid phases to obtain polymers. In the present invention, to form polyamide, a first solution, that is aqueous, obtained by dissolving a multifunctional amine compound having at least two amine groups in water, and a second solution, that is non-polar, obtained by dissolving a multifunctional aromatic acyl halide compound having at least two acyl halide groups in an organic solvent may be prepared.

The multifunctional amine compound in the first solution may preferably include metaphenylenediamine, paraphenylenediamine, piperazine, cycloaliphatic secondary diamine, N,N'-dimethyl-1,3-phenylenediamine, N,N'-diphenylethylene diamine, benzathine, and xylene diamine.

The multifunctional acyl halide compound in the second solution may preferably include trimezoyl chloride, isophthaloyl chloride, and terephthaloyl chloride. Also, the organic solvent of the second solution may include hexane, cyclohexane, heptane, C₈ to C₁₂ alkanes, dichlorodifluoromethane, trichlorofluoromethane, chlorodifluoromethane, dichlorotetrafluoroethane, and trichlorotrifluoroethane.

Subsequently, the first and second solutions may be coated on at least one surface of the plate-like porous substrate in a sequential manner, followed by interfacial polymerization, to form a porous thin-film coating layer containing crosslinked polyamide.

Preferably, the first solution, that is aqueous, may be coated on the plate-like porous substrate using a conventional liquid coating technique such as roll coating, bar coating, spray coating or dipping, and the second solution, that is non-polar, may be then coated thereon. The solutions may be coated on one surface or both surfaces of the plate-like porous substrate. To minimize the conversion of the acyl halide compound of the second solution into carboxylic acid by the reaction with water, it is preferred to squeeze the porous substrate coated with the first solution before coating with the second solution so as to adjust the thickness of the first solution.

A polyamide thin-film coating layer may be formed by polymerization at the interface between the first solution and the second solution at room temperature. In this instance, crosslinked polyamide may be formed by condensation polymerization between a plurality of amine groups and a plurality of acyl halide groups by using the multifunctional amine compound and the multifunctional acyl halide compound.

Subsequently, post-processing including washing and drying may be performed on the porous thin-film coating layer containing crosslinked polyamide, to manufacture a separator. Preferably, the porous thin-film coating layer has a thickness of 0.1 to 1 µm. By controlling the concentration of the first and second solutions or the interfacial polymerization time, the porous thin-film coating layer may have a desired thickness.

The separator of the present invention may be interposed between a cathode and an anode to fabricate an electrochemical device. In this instance, when a gellable polymer is used as a binder polymer component, the polymer used may form a gel by the reaction with an electrolyte injected after the battery assembly using the separator.

The electrochemical device of the present invention may include all devices in which an electrochemical reaction may occur, for example, all kinds of primary batteries, secondary batteries, fuel cells, solar cells, or capacitors including supercapacitors. In particular, among secondary batteries, lithium secondary batteries including lithium metal secondary batteries, lithium ion secondary batteries, lithium polymer secondary batteries or lithium ion polymer secondary batteries are preferred.

The electrode to be used with the separator of the present invention is not particularly limited, and may be manufactured by binding an electrode active material to a current collector using conventional methods known in the art. In the electrode active material, a cathode active material may include, but is not limited to, typical cathode active materials that are usable for a cathode of a conventional electrochemical device, and in particular, lithium manganese oxides, lithium cobalt oxides, lithium nickel oxides, lithium iron oxides or lithium composite oxides thereof are preferred. An anode active material may include, but is not limited to, typical anode active materials that are usable for an anode of a conventional electrochemical device, and in particular, lithium intercalation materials such as lithium metals, lithium alloys, carbon, petroleum coke, activated carbon, graphite, or other carbonaceous materials are preferred. A cathode current collector may be formed of, for example, a foil made from aluminum, nickel, or combinations thereof, and an anode current collector may be formed of, for example, a foil made from copper, gold, nickel, copper alloys, or combinations thereof. However, the present invention is not limited in this regard.

The electrolyte usable in the present invention may contain a salt having the structure of A⁺B⁻, wherein A⁺ represents an alkali metal cation selected from the group consisting of Li⁺, Na⁺ and K⁺, or combinations thereof, and B⁻ represents an anion selected from the group consisting of PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, and C(CF₂SO₂)₃⁻, or combinations thereof, the salt being dissolved or dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), and gamma-butyrolactone (γ-butyrolactone), or mixtures thereof. However, the present invention is not limited in this regard.

The electrolyte may be injected in a suitable step during fabrication of a battery, depending on the fabrication process and the desired properties of a final product. In other words, the electrolyte may be injected before the battery assembly or at the end of the battery assembly.

Generally, the separator of the present invention is applied to a battery by winding, however may be applied to a battery by lamination or stacking, folding, and the like.

The separator of the present invention may be interposed between a cathode and an anode in a secondary battery, or in the case of an electrode assembly composed of a plurality of cells or electrodes, may be interposed between adjacent cells or electrodes. The electrode assembly may have various structures of, for example, stack-type, jelly roll-type, stack/folding-type, and the like.

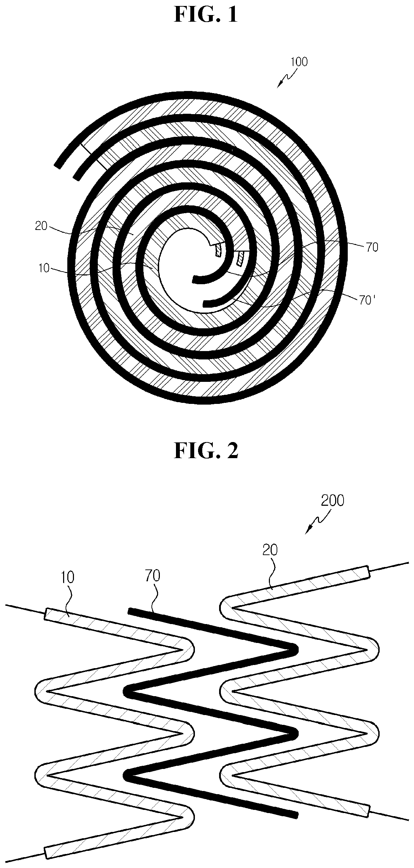

Referring to FIG. 1, an electrode assembly 100 according to an embodiment may be manufactured by placing a separator 70 of the present invention between a cathode 10 and an anode 20, each coated with an active material, and then winding the cathode 10, the separator 70, and the anode 20 in a continuous manner. Referring to FIG. 2, an electrode assembly 200 according to an alternative embodiment may be manufactured by bending the cathode 10, the separator 70, and the anode 20 in a zigzag fashion at regular intervals. In the electrode assembly manufactured by winding or bending, a plurality of electrodes and a plurality of separators may be alternately stacked for capacity improvement.

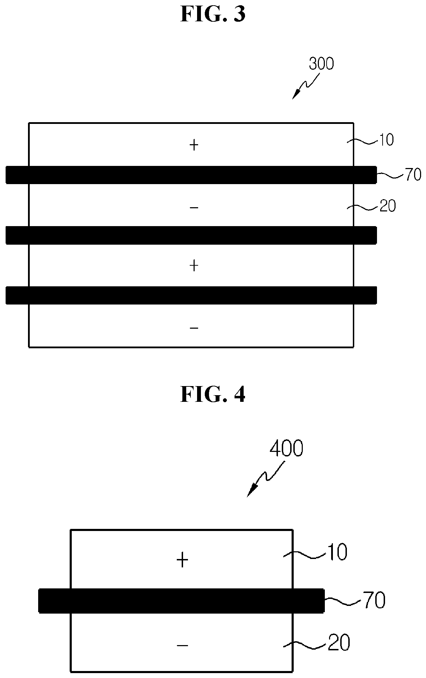

Referring to FIG. 3, an electrode assembly 300 according to another embodiment may be manufactured by stacking the cathode 10/the separator 70/the anode 20 or the anode/the separator/the cathode as a repeat unit. Here, the separator 70 used may be the separator of the present invention.

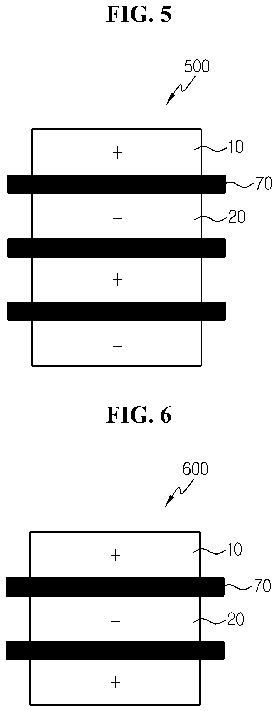

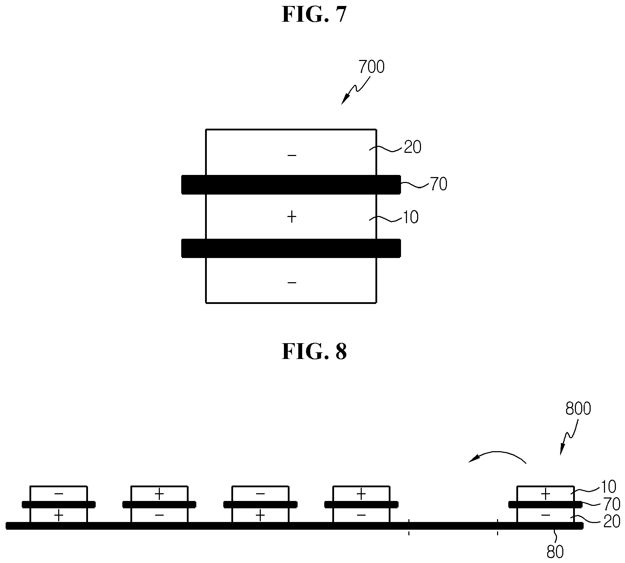

According to an embodiment, the electrode assembly may be manufactured by assembling a plurality of unit cells having a full cell or bi-cell structure on a folding film. Here, the folding film may be a typical insulated film or the separator of the present invention. The full cell structure may have at least one cell comprising electrodes having opposite polarity and a separator interposed therebetween, in which the outmost electrodes have opposite polarity. As an example of the full cell structure, a cathode/separator/anode or a cathode/separator/anode/separator/cathode/separator/anode may be mentioned as shown in FIGS. 4 and 5. The bi-cell structure may have at least one cell comprising electrodes having opposite polarity and a separator interposed therebetween, in which the outmost electrodes have the same polarity. As an example of the bi-cell structure, a cathode/separator/anode/separator/cathode or an anode/separator/cathode/separator/anode may be mentioned as shown in FIGS. 6 and 7.

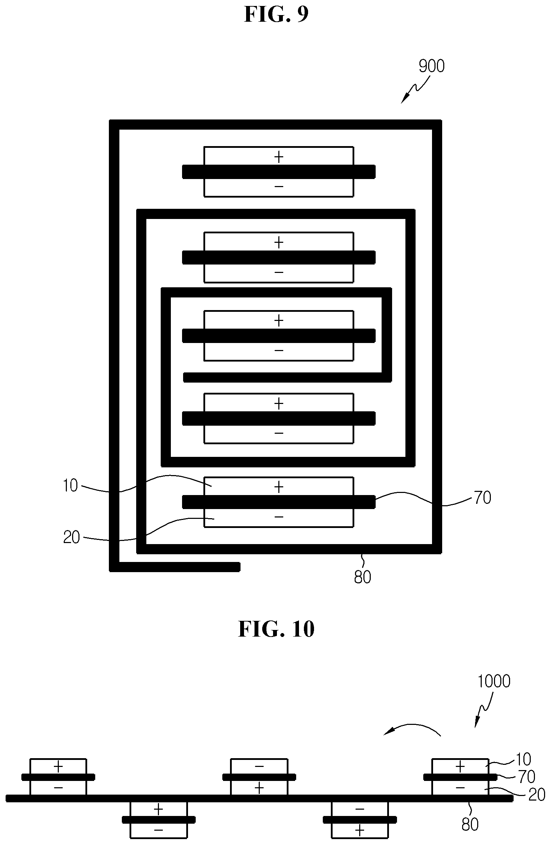

Assembling of unit cells using a folding film may be made in various ways. For example, as shown in FIGS. 8 and 9, a plurality of unit cells may be arranged at a predetermined interval on one surface of a folding film extending in a lengthwise direction, and the arranged unit cells and the folding film may be wound in one direction. The resulting electrode assembly may be such that the unit cells are inserted in the wound folding film. Alternatively, as shown in FIG. 10, a plurality of unit cells may be arranged at a predetermined interval on both surfaces of a folding film extending in a lengthwise direction, and the arranged unit cells and the folding film may be wound in one direction. The resulting electrode assembly may be such that the unit cells are inserted in the wound folding film. The intervals between the unit cells and the polarity of the outmost electrode in each of the unit cells may be selected such that an electrode located on and in contact with the folding film and an electrode located under and in contact with the folding film are opposite in polarity. For example, the intervals between the unit cells and the polarity of the outmost electrode in each of the unit cells may be selected such that the electrode assembly has the structure of cathode/separator/anode/folding film/cathode/separator/anode/folding film/cathode ...

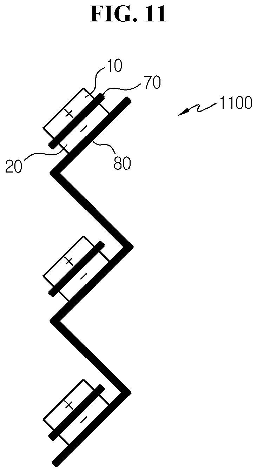

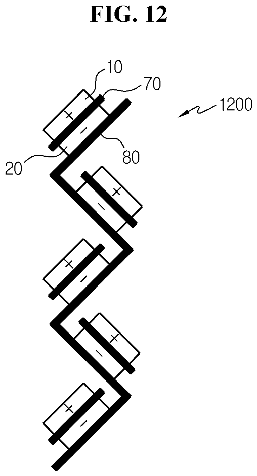

Alternatively, as shown in FIG. 11, a plurality of unit cells may be arranged at a predetermined interval on one surface of a folding film extending in a lengthwise direction, and the arranged unit cells and the folding film may be bent in a zigzag fashion. The resulting electrode assembly may be such that the unit cells are inserted in the bent and stacked folding film. Alternatively, as shown in FIG. 12, a plurality of unit cells may be arranged at a predetermined interval on both surfaces of a folding film extending in a lengthwise direction, and the arranged unit cells and the folding film may be bent in a zigzag fashion. The resulting electrode assembly may be such that the unit cells are inserted in the bent and stacked folding film. In this instance, the intervals between the unit cells and the polarity of the outmost electrode in each of the unit cells may be selected such that an electrode located on and in contact with the folding film and an electrode located under and in contact with the folding film are opposite in polarity. For example, the intervals between the unit cells and the polarity of the outmost electrode in each of the unit cells may be selected such that the electrode assembly has the structure of cathode/separator/anode/folding film/cathode/separator/anode/folding film/cathode ...

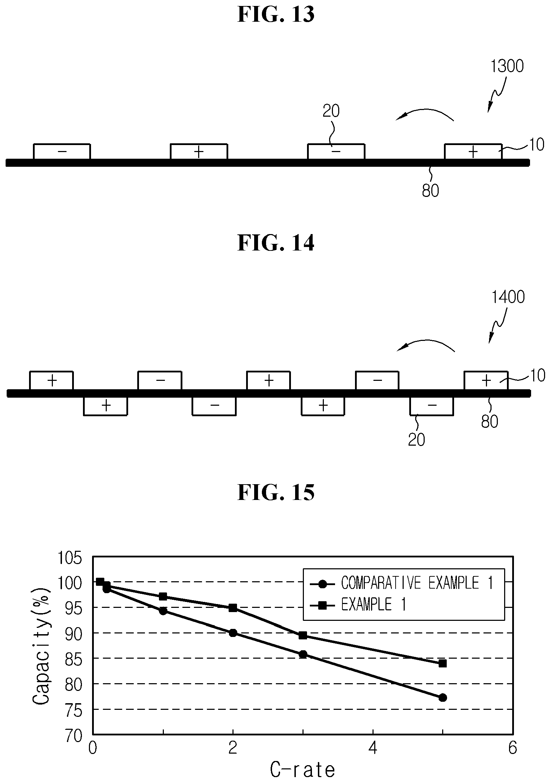

Assembling of electrodes using a folding film may be also made in various ways. For example, as shown in FIG. 13, electrodes may be arranged on one surface of a folding film in an alternate order of, for example, an anode, a cathode, an anode, a cathode..., and the arranged electrodes and the folding film may be wound in one direction. The resulting electrode assembly may be such that the electrodes are inserted in the wound folding film. Alternatively, as shown in FIG. 14, a plurality of electrodes may be arranged at a predetermined interval on both surfaces of a folding film extending in a lengthwise direction, and the arranged electrodes and the folding film may be wound in one direction. The resulting electrode assembly may be such that the electrodes are inserted in the wound folding film. In this instance, the intervals and polarity of the electrodes may be selected such that an electrode located on and in contact with the folding film and an electrode located under and in contact with the folding film are opposite in polarity. For example, the intervals and polarity of the electrodes may be selected to manufacture an electrode assembly of cathode/folding film/anode/folding film/cathode...

Alternatively, electrodes may be arranged on one surface of a folding film in an alternate order of, for example, an anode, a cathode, an anode, a cathode ..., and the arranged electrodes and the folding film may be bent in one direction. The resulting electrode assembly may be such that the electrodes are inserted in the bent and stacked folding film. Alternatively, a plurality of electrodes may be arranged at a predetermined interval on both surfaces of a folding film extending in a lengthwise direction, and the arranged electrodes and the folding film may be bent. The resulting electrode assembly may be such that the electrodes are inserted in the bent and stacked folding film. In this instance, the intervals and polarity of the electrodes may be selected such that an electrode located on and in contact with the folding film and an electrode located under and in contact with the folding film are opposite in polarity. For example, the intervals and polarity of the electrodes may be selected to manufacture an electrode assembly of cathode/folding film/anode/folding film/cathode ...

Meanwhile, the length of the folding film used in manufacturing the electrode assembly may be selected such that the folding film can surround the electrode assembly at least once after the last cell or electrode is placed in the above manner. However, the electrode assembly is not limited in this regard, and may be modified in various types.

Hereinafter, the preferred embodiments of the present invention are described in detail. However, it should be understood that the detailed description and specific examples, while indicating preferred embodiments of the invention, are given by way of illustration only.

### EXAMPLE

### Comparative Example 1: Triple layered separator for a lithium ion battery

A triple-layered separator for a lithium secondary battery composed of PP (polypropylene)/PE (polyethylene)/PP (polypropylene) was prepared. The separator had a thickness of 20 µm, a porosity of 40 %, and a pore size of 0.03 µm.

### Example 1: Polyamide-coated triple-layered separator for a lithium ion battery

An aqueous solution of 2 w% of metaphenyldiamine and a solution of isoparaffin and 0.1 w% of trimezoyl chloride were prepared.

Next, the triple-layered separator of comparative example 1 was dipped in the aqueous solution of 2 w% of metaphenyldiamine for 2 minutes, and the remaining water was then removed by means of rollers. The treated triple-layered separator was dipped in the solution of isoparaffin and 0.1 w% of trimezoyl chloride at room temperature for 1 minute.

The triple-layered separator having a polyester coating layer was dried in the air for 2 minutes, washed with water, and dried in a 70°C oven for 1 hour.

### Test Example 1: Measurement of air permeability

The comparative example 1 and example 1 were measured for air permeability, and the results are shown in Table 1 below.

**[Table 1]**

| | Air permeability (sec/100Mℓ) |
|---|---|
| Comparative example 1 | 440 |
| Example 1 | 420 |

As shown in the above Table 1, because air permeabilities of comparative example 1 and example 1 are nearly equal to each other, it was found that the crosslinked polyamide coating layer of the present invention hardly affects the air permeability.

### Test Example 2: Measurement of thermal shrinkage

The comparative example 1 and example 1 were heated in a 170°C oven for 1 hour, and measured for their area before and after heating to calculate their thermal shrinkage. The results are shown in Table 2 below.

**[Table 2]**

| | Thermal shrinkage (%) |
|---|---|
| Comparative example 1 | 48 |
| Example 1 | 31 |

As shown in the above Table 2, because the thermal shrinkage of example 1 is superior to that of comparative example 1, it was found that the crosslinked polyamide coating layer of the present invention has excellent thermal stability.

### Test Example 3: Test for wettability

The comparative example 1 and example 1 were cut into 1×10 cm and dipped into an air-tight container containing an ethylene carbonate (EC) electrolyte to a depth of 1 cm. After a predetermined time lapsed, the movement distance of the electrolyte was measured. The results are shown in Table 2 below.

**[Table 3]**

| | 1 minute | 30 minutes |
|---|---|---|
| Comparative example 1 | 1 mm | 2 mm |
| Example 1 | 1 mm | 22 mm |

The comparative example 1 showed that the movement distance of the electrolyte after the lapse of 30 minutes was 2 mm, and the example 1 having a polyamide coating layer showed that the movement distance of the electrolyte after the lapse of 30 minutes was 22 mm. Accordingly, it was found that the example 1 has excellent wettability to an electrolyte.

### Test Example 4: Test for charging performance

A lithium secondary battery was fabricated by placing an anode (a copper foil coated with natural graphite) and a cathode (lithium metal) with the separator of comparative example 1 or example 1 interposed therebetween, and inserting 1M LiPF₆EC/EMC electrolyte. Next, the battery was tested for charging performance, and the results are shown in FIG. 15.

Referring to FIG. 15, it was found that a battery comprising the separator of example 1 had better charging performance than that of a battery comprising the separator of comparative example 1.

## Claims

1. A separator for lithium secondary battery comprising:
a plate-like porous substrate; and
a porous thin-film coating layer formed on at least one surface of the plate-like porous substrate,
the porous thin-film coating layer consisting of crosslinked polyamide prepared by polymerization of a multifunctional amine compound having at least two amine groups with a multifunctional acyl halide compound of an aromatic compound having at least two acyl halide groups, and
the plate-like porous substrate being a polyolefin-based porous membrane.

2. The separator for lithium secondary battery according to claim 1,
wherein the multifunctional amine compound is any one amine selected from the group consisting of metaphenylenediamine, paraphenylenediamine, piperazine, cycloaliphatic secondary diamine, N,N'-dimethyl-1,3-phenylenediamine, N,N'-diphenylethylene diamine, benzathine, and xylene diamine, or mixtures thereof.

3. The separator for lithium secondary battery according to claim 1,
wherein the multifunctional acyl halide compound is any one aromatic acyl halide selected from trimezoyl chloride, isophthaloyl chloride, and terephthaloyl chloride, or mixtures thereof.

4. The separator for lithium secondary battery according to claim 1,
wherein the plate-like porous substrate is a monolayer or a multilayer.

5. The separator for lithium secondary battery according to claim 1,
wherein the polyolefin-based porous membrane is formed from any one polymer selected from the group consisting of polyethylene, polypropylene, polybutylene and polypentene, or mixtures thereof.

6. The separator for lithium secondary battery according to claim 1,
wherein the plate-like porous substrate has a thickness of 5 *µ*m to 50 *µ*m, a pore size of 0.01 *µ*m to 50 *µ*m, and a porosity of 10% to 95%.

7. A method for manufacturing a separator for lithium secondary battery defined in claim 1, the method comprising:
preparing a first solution by dissolving a multifunctional amine compound having at least two amine groups in water, and a second solution by dissolving a multifunctional acyl halide compound of an aromatic compound having at least two acyl halide groups in an organic solvent; and
sequentially applying the first solution and the second solution on at least one surface of a plate-like porous substrate, followed by interfacial polymerization,
wherein the plate-like porous substrate is a polyolefin-based porous membrane.

8. The method according to claim 7,
wherein the multifunctional amine compound is any one amine selected from the group consisting of metaphenylenediamine, paraphenylenediamine, piperazine, cycloaliphatic secondary diamine, N,N'-dimethyl-1,3-phenylenediamine, N,N'-diphenylethylene diamine, benzathine, and xylene diamine, or mixtures thereof.

9. The method according to claim 7,
wherein the multifunctional acyl halide compound is any one aromatic acyl halide selected from trimezoyl chloride, isophthaloyl chloride, and terephthaloyl chloride, or mixtures thereof.

10. The method according to claim 7,
wherein the organic solvent is any one compound selected from hexane, cyclohexane, heptane, C₈ to C₁₂ alkanes, dichlorodifluoromethane, trichlorofluoromethane, chlorodifluoromethane, dichlorotetrafluoroethane and trichlorotrifluoroethane, or mixtures thereof.

11. The method according to claim 7,
wherein the plate-like porous substrate is a monolayer or a multilayer.

12. The method according to claim 7,
wherein the polyolefin-based porous membrane is formed from any one polymer selected from the group consisting of polyethylene, polypropylene, polybutylene and polypentene, or mixtures thereof.

13. A lithium secondary battery, comprising:
a cathode;
an anode; and
a separator interposed between the cathode and the anode,
wherein the separator is defined in any one of claims 1 to 6.

## Patentansprüche

1. Separator für eine Lithium-Sekundärbatterie, umfassend:
- ein plattenartiges poröses Substrat; und
- eine poröse Dünnfilmdeckschicht, die auf mindestens einer Oberfläche des plattenartigen porösen Substrats gebildet ist,
wobei die poröse Dünnfilmdeckschicht aus vernetztem Polyamid besteht, das durch Polymerisation einer multifunktionellen Aminverbindung mit mindestens zwei Amingruppen mit einer multifunktionellen Acylhalogenid-Verbindung einer aromatischen Verbindung mit mindestens zwei Acylhalogenid-Gruppen hergestellt ist, und
wobei das plattenartige poröse Substrat eine poröse Membran auf Polyolefinbasis ist.

2. Separator für eine Lithium-Sekundärbatterie nach Anspruch 1,
wobei die multifunktionelle Aminverbindung ein beliebiges Amin ist, ausgewählt aus der Gruppe bestehend aus Metaphenylendiamin, Paraphenylendiamin, Piperazin, cycloaliphatischem sekundärem Diamin, N,N'-Dimethyl-1,3-phenylendiamin, N,N'-Diphenylethylendiamin, Benzathin und Xylendiamin oder Mischungen davon.

3. Separator für eine Lithium-Sekundärbatterie nach Anspruch 1,
wobei die multifunktionelle Acylhalogenid-Verbindung ein beliebiges aromatisches Acylhalogenid ist, ausgewählt aus Trimezoylchlorid, Isophthaloylchlorid und Terephthaloylchlorid oder Mischungen davon.

4. Separator für eine Lithium-Sekundärbatterie nach Anspruch 1,
wobei das plattenartige poröse Substrat eine Monoschicht oder eine Multischicht ist.

5. Separator für eine Lithium-Sekundärbatterie nach Anspruch 1,
wobei die poröse Membran auf Polyolefinbasis aus einem beliebigen Polymer gebildet ist, ausgewählt aus der Gruppe bestehend aus Polyethylen, Polypropylen, Polybutylen und Polypenten oder Mischungen davon.

6. Separator für eine Lithium-Sekundärbatterie nach Anspruch 1,
wobei das plattenartige poröse Substrat eine Dicke von 5 µm bis 50 µm, eine Porengröße von 0,01 µm bis 50 µm und eine Porosität von 10% bis 95% aufweist.

7. Verfahren zur Herstellung eines Separators für eine Lithium-Sekundärbatterie nach Anspruch 1, wobei das Verfahren umfasst:
Herstellen einer ersten Lösung durch Auflösen einer multifunktionellen Aminverbindung mit mindestens zwei Amingruppen in Wasser und einer zweiten Lösung durch Auflösen einer multifunktionellen Acylhalogenid-Verbindung einer aromatischen Verbindung mit mindestens zwei Acylhalogenid-Gruppen in einem organischen Lösungsmittel; und
aufeinanderfolgendes Auftragen der ersten Lösung und der zweiten Lösung auf mindestens eine Oberfläche eines plattenartigen porösen Substrats, gefolgt von Grenzflächenpolymerisation,
wobei das plattenartige poröse Substrat eine poröse Membran auf Polyolefinbasis ist.

8. Verfahren nach Anspruch 7,
wobei die multifunktionelle Aminverbindung ein beliebiges Amin ist, ausgewählt aus der Gruppe bestehend aus Metaphenylendiamin, Paraphenylendiamin, Piperazin, cycloaliphatischem sekundärem Diamin, N,N'-Dimethyl-1,3-phenylendiamin, N,N'-Diphenylethylendiamin, Benzathin und Xylendiamin oder Mischungen davon.

9. Verfahren nach Anspruch 7,
wobei die multifunktionelle Acylhalogenid-Verbindung ein beliebiges aromatisches Acylhalogenid ist, ausgewählt aus Trimezoylchlorid, Isophthaloylchlorid und Terephthaloylchlorid oder Mischungen davon.

10. Verfahren nach Anspruch 7,
wobei das organische Lösungsmittel eine beliebige Verbindung ist, ausgewählt aus Hexan, Cyclohexan, Heptan, C₈ bis C₁₂-Alkanen, Dichlordifluormethan, Trichlorfluormethan, Chlordifluormethan, Dichlortetrafluorethan und Trichlortrifluorethan oder Mischungen davon.

11. Verfahren nach Anspruch 7,
wobei das plattenartige poröse Substrat eine Monoschicht oder eine Multischicht ist.

12. Verfahren nach Anspruch 7,
wobei die poröse Membran auf Polyolefinbasis aus einem beliebigen Polymer gebildet ist, ausgewählt aus der Gruppe bestehend aus Polyethylen, Polypropylen, Polybutylen und Polypenten oder Mischungen davon.

13. Lithium-Sekundärbatterie, umfassend:
eine Kathode;
eine Anode; und
einen Separator, der zwischen der Kathode und der Anode angeordnet ist, wobei der Separator nach einem der Ansprüche 1 bis 6 definiert ist.

## Revendications

1. Séparateur pour batterie secondaire au lithium comprenant :
un substrat poreux de type plaque ; et
une couche de revêtement poreuse en film mince sur au moins une surface du substrat poreux de type plaque,
la couche de revêtement poreuse en film mince étant constituée de polyamide réticulé préparé par polymérisation d'un composé d'aminé multifonctionnel ayant au moins deux groupes amine avec un composé d'halogénure d'acyle multifonctionnel d'un composé aromatique ayant au moins deux groupes halogénure d'acyle, et
le substrat poreux de type plaque étant une membrane poreuse à base de polyoléfine.

2. Séparateur pour batterie secondaire au lithium selon la revendication 1,
dans lequel le composé d'aminé multifonctionnel est une quelconque amine choisie dans le groupe constitué de métaphénylènediamine, paraphénylènediamine, pipérazine, diamine secondaire cycloaliphatique, N,N'-diméthyl-1,3-phénylènediamine, N,N'-diphényléthylène diamine, benzathine et diamine de xylène, ou des mélanges de celle-ci.

3. Séparateur pour batterie secondaire au lithium selon la revendication 1,
dans lequel le composé d'halogénure d'acyle multifonctionnel est un quelconque halogénure d'acyle aromatique choisi parmi le chlorure de trimézoyle, le chlorure d'isophtaloyle et le chlorure de téréphtaloyle, ou des mélanges de ceux-ci.

4. Séparateur pour batterie secondaire au lithium selon la revendication 1,
dans lequel le substrat poreux de type plaque est un monocouche ou un multicouche.

5. Séparateur pour batterie secondaire au lithium selon la revendication 1,
dans lequel la membrane poreuse à base de polyoléfine est formée à partir d'un quelconque polymère choisi dans le groupe constitué de polyéthylène, polypropylène, polybutylène et polypentène, ou de mélanges de ceux-ci.

6. Séparateur pour batterie secondaire au lithium selon la revendication 1,
dans lequel le substrat poreux de type plaque a une épaisseur de 5 µm à 50 µm, une taille de pore de 0,01 µm à 50 µm, et une porosité de 10 % à 95 %.

7. Procédé de fabrication d'un séparateur pour batterie secondaire au lithium défini dans la revendication 1, le procédé comprenant :
la préparation d'une première solution en dissolvant un composé d'aminé multifonctionnel ayant au moins deux groupes amine dans de l'eau, et d'une seconde solution en dissolvant un composé d'halogénure d'acyle multifonctionnel d'un composé aromatique ayant au moins deux groupes halogénure d'acyle dans un solvant organique ; et
l'application séquentielle de la première solution et de la seconde solution sur au moins une surface d'un substrat poreux de type plaque, suivie par une polymérisation interfaciale,
dans lequel le substrat poreux de type plaque est une membrane poreuse à base de polyoléfine.

8. Procédé selon la revendication 7,
dans lequel le composé d'aminé multifonctionnel est une quelconque amine choisie dans le groupe constitué de métaphénylènediamine, paraphénylènediamine, pipérazine, diamine secondaire cycloaliphatique, N,N'-diméthyl-1,3-phénylènediamine, N,N'-diphényléthylène diamine, benzathine et diamine de xylène, ou des mélanges de celles-ci.

9. Procédé selon la revendication 7,
dans lequel le composé d'halogénure d'acyle multifonctionnel est un quelconque halogénure d'acide aromatique choisi parmi le chlorure de trimézoyle, le chlorure d'isophtaloyle et le chlorure de téréphtaloyle, ou des mélanges de ceux-ci.

10. Procédé selon la revendication 7,
dans lequel le solvant organique est un quelconque composé choisi parmi hexane, cyclohexane, heptane, alcanes en C₈ à C₂, dichlorodifluorométhane, trichlorofluorométhane, chlorodifluorométhane, dichlorotétrafluoroéthane et trichlorotrifluoroéthane, ou des mélanges de ceux-ci.

11. Procédé selon la revendication 7,
dans lequel le substrat poreux de type plaque est un monocouche ou un multicouche.

12. Procédé selon la revendication 7,
dans lequel la membrane poreuse à base de polyoléfine est formée d'un quelconque polymère choisi dans le groupe constitué de polyéthylène, polypropylène, polybutylène et polypentène, ou de mélanges de ceux-ci.

13. Batterie secondaire au lithium, comprenant :
une cathode ;
une anode ; et
un séparateur intercalé entre la cathode et l'anode,
dans lequel le séparateur est défini dans l'une quelconque des revendications 1 à 6.
